# EUROPÄISCHE PATENTSCHRIFT

(11) **EP 2 141 368 B1**
(45) Veröffentlichungstag und Bekanntmachung des Hinweises auf die Patenterteilung: **07.10.2015**
(21) Anmeldenummer: 09163335.4
(22) Anmeldetag: 22.06.2009
(51) Int. Cl.: F16B 37/06

(54) **Befestigungselement**
Attachment element
Elément de fixation

(30) Priorität: 03.07.2008 DE 102008032692
(43) Veröffentlichungstag der Anmeldung: 06.01.2010
(73) Patentinhaber: Arnold & Shinjo GmbH & Co. KG, 74677 Dörzbach (DE)
(72) Erfinder: Beck, Friedrich, 74613 Öhringen (DE)
(74) Vertreter: Schöndorf, Jürgen

(56) Entgegenhaltungen:
- EP-A1- 1 610 006
- EP-A2- 1 892 427
- DE-A1- 10 243 759
- DE-A1-102006 050 640
- US-A- 2 138 409

## Beschreibung

Die Erfindung betrifft ein Befestigungselement, das an einem Blechbauteil befestigt werden soll und zur Befestigung eines weiteren Elementes dient, beispielsweise einer Schraube.

Bei Blechen ist es wegen der geringen Dicke nicht möglich, in einem Loch ein tragfähiges Gewinde einzuschneiden. Daher verwendet man Muttern, die mit dem Blech beispielsweise durch Stanzen oder Schweißen verbunden werden. Das Stanzen hat den Vorteil, dass sich dies sehr schnell durchführen lässt. Außerdem kann man beim Stanzen eine Verformung des Blechs in der Weise erreichen, dass die Stanzmutter auch in Drehrichtung formschlüssig festgelegt ist.

Bei formgehärteten Bauteilen und Bauteilen aus hochfesten oder höherfesten Stählen ist wegen der großen Härte des Bauteils das Einstanzen von Muttern aber nicht möglich.

Es ist bereits ein gegen Drehung gesicherter spreizbarer Hohlniet bekannt (DE 1284168), der einen Schaft mit einem mehreckigen Querschnitt aufweist. Die Sicherung gegen Verdrehen wird durch eine Wulstbildung an der dem Kopf des Befestigungselements abgewandten Seite des Blechs erreicht.

Ebenfalls bekannt sind viereckige Muttern, die in Schlitzen verschiebbar geführt sind (DE 2412774).

Weiterhin ist ein Befestigungselement mit einem durch ein Loch eines Bauteils hindurch greifenden Ansatz bekannt, bei der ein Teil des Ansatzes spanabhebend abgeschält und gegen das Bauteil angepresst wird (EP 1892427A2).

Bei einem weiteren Befestigungselement für Kunststoffmaterial wird ein Teil des durch das Loch des Kunststoffmaterials greifenden Elements in Freiräume des Kunststoffmaterials derart eingepresst, dass die Rückseite bündig verläuft (EP 1610006 A1).

Eine Klemmmutter ist bekannt, die mit einem Ansatz durch ein Loch eines Blechmaterials hindurch gesteckt wird. Von der Rückseite her wird der Rand des Ansatzes vernietet. Der Ansatz hat eine scharfe Kante (US 2138409, gattungsbildend).

Ebenfalls bekannt ist ein Befestigungselement mit einem Ansatz, der von der Rückseite her umgefaltet wird. Dieses Befestigungselement bleibt verschiebbar (DE 102006050640 A1).

Weiterhin bekannt ist ein Befestigungselement, das als Kabelschuh ausgebildet sein kann und einen Ansatz aufweist, mit dem es ein Loch in einem Blech stanzen kann. Der Ansatz weist einen inneren und einen äußeren Teil auf, die durch eine Trennfuge geteilt sind. Die abgerundete Kante des äußeren Teils des Ansatzes soll das Verformen des Blechs erleichtern (DE 10243759 A1).

Der Erfindung liegt die Aufgabe zu Grunde, ein Befestigungsmittel zu schaffen, das insbesondere bei formgehärteten Bauteilen und bei hochfesten oder höherfesten Stählen verwendet werden kann, das die erforderliche Sicherheit gegen Auszug und Verdrehung aufweist **und das sich mit geringem Aufwand leicht vernieten lässt.**

Zur Lösung dieser Aufgabe schlägt die Erfindung ein Befestigungselement mit den im Anspruch 1 genannten Merkmalen vor. Weiterbildungen der Erfindung sind Gegenstand von Unteransprüchen.

Man verwendet also bei formgehärteten Bauteilen solche Bauteile, bei denen vor oder nach der Formhärtung schon ein entsprechendes zur Befestigung dienendes Loch hergestellt wird. Nach der Formhärtung wird dann das Befestigungselement mit seinem Rand mit dem Bauteil vernietet. Dieses Vernieten kann in einem Vorgang geschehen, indem nämlich mithilfe eines Pressstempels das Befestigungselement durch das Loch des Bauteils hindurch in eine Matrize gepresst wird, die den Rand nach außen umbiegt und dadurch die Vernietung des Befestigungsansatzes mit dem Rand des Lochs bewirkt. Die Begrenzung der Bewegung des Befestigungselements beim Vernieten geschieht durch die Anlagefläche, die an der Oberseite des Bauteils ringsum das Loch zur Anlage kommt. Die Vernietung stellt eine Sicherung des Befestigungselements in Auszugsrichtung dar und wirkt auch in Drehrichtung in gewissem Ausmaß als kraftschlüssige Sicherung mit. In genau der gleichen Weise wird dies bei Bauteilen aus hochfesten oder höherfesten Stählen durchgeführt.

Um die Sicherung in Drehrichtung weiter zu verbessern, ist erfindungsgemäß vorgesehen, dass der Befestigungsansatz eine von einer Kreisform abweichende Außenkontur aufweist. Diese Außenkontur entspricht der Form des Lochs in dem formgehärteten Bauteil. Dann liegt die Außenseite des Befestigungsansatzes eng an dem Rand des Lochs an und gewährleistet auf diese Weise den Formschluss in Drehrichtung. Der Formschluss in Auszugsrichtung wird durch die Vernietung des Randes des Befestigungsansatzes erreicht.

Im Grundsatz ist jede deutlich von der Kreisform abweichende Außenkontur des Befestigungsansatzes geeignet, einen Formschluss in Drehrichtung zu bewirken. Es hat sich aber als besonders sinnvoll herausgestellt, der Außenkontur des Befestigungsansatzes die Form eines Vierecks mit abgerundeten Ecken und vorzugsweise gekrümmten Seitenlinien zugeben.

Um bei einer automatischen Montage sicherstellen zu können, dass der von der Kreisform abweichende Befestigungsansatz in das entsprechend geformte Loch des Bauteils ohne langes Suchen eingesetzt werden kann, weist erfindungsgemäß das Befestigungselement ein Ausrichtmittel auf, an dem man bei einer automatischen Montage erkennen kann, wie die Orientierung des Befestigungselements ist. Besonders sinnvoll ist es, wenn das Ausrichtmittel durch die Außenkontur der Anlagefläche beziehungsweise durch die Außenkontur des Befestigungselements auf der dem Befestigungsansatz abgewandten Seite der Anlagefläche gebildet wird. An diese Außenkontur kann ein Greifer angreifen und auf diese Weise schon die richtige Orientierung herstellen.

Insbesondere kann vorgesehen sein, dass das Befestigungselement in seinem dem Befestigungsansatz abgewandten Bereich eine Außenkontur in Form eines Quadrats mit abgerundeten Ecken aufweist.

In nochmaliger Weiterbildung der Erfindung kann vorgesehen sein, das die Seitenflächen des Befestigungselements angenähert parallel zu den gekrümmten Seiten der Außenkontur des Befestigungsansatzes verlaufen. Dies ist die einfachste Methode, eine Ausrichtung zwischen dem Befestigungselement und dem Loch in dem formgehärteten Bauteil herstellen zu können.

Bei dem Befestigungselement kann es sich insbesondere um eine Mutter handeln, bei dem das Befestigungselement also eine durchgehende Innenöffnung aufweist, die mit einem Gewinde versehen ist.

Falls mit dem Befestigungselement eine Lagerung erreicht werden soll, kann es sich auch um eine Innenöffnung ohne Gewinde, das heißt mit glatten Wänden, handeln.

Ebenfalls denkbar und möglich ist ein Sackloch, sowohl mit Gewinde als auch ohne Gewinde.

In nochmaliger Weiterbildung kann auch vorgesehen sein, dass das Befestigungselement einen senkrecht zur Anlagefläche verlaufenden Zapfen auf einer der beiden oder auf beiden Seiten aufweist, wobei dieser Zapfen entweder glatt oder mit einem Gewinde versehen sein kann.

Damit der Rand sich mit geringem Aufwand leicht vernieten lässt, ist erfindungsgemäß vorgesehen, dass die Stirnkante des Rands abgerundet verläuft und dadurch in einer Matrize leichter umgebogen werden kann.

Insbesondere kann der Befestigungsansatz als Hülse ausgebildet sein.

Die Erfindung schlägt ebenfalls die Verwendung eines Befestigungselements, wie es hierin beschrieben ist, zur drehfesten Befestigung in einem vorhandenen Loch eines Bauteils vor.

Die Erfindung schlägt ebenfalls die Anordnung eines Befestigungselements in einem Loch eines Bauteils vor, wobei die Form und Größe des Befestigungsansatzes des Befestigungselements der Form und Größe des Lochs des Bauteils entspricht.

Weitere Merkmale, Einzelheiten und Vorzüge der Erfindung ergeben sich aus den Ansprüchen, der folgenden Beschreibung bevorzugter Ausführungsformen der Erfindung sowie anhand der Zeichnung. Hierbei zeigen:
- Figur 1: die Ansicht eines von der Erfindung vorgeschlagenen Befestigungselements von seiner Unterseite her;
- Figur 2: einen Axialschnitt durch das Befestigungselement der Figur 1;
- Figur 3: eine perspektivische Ansicht eines Befestigungselements von unten;
- Figur 4: die Form eines Lochs in dem Bauteil;
- Figur 5: die Anordnung des Befestigungselements vor der Anbringung an einem Bauteil.

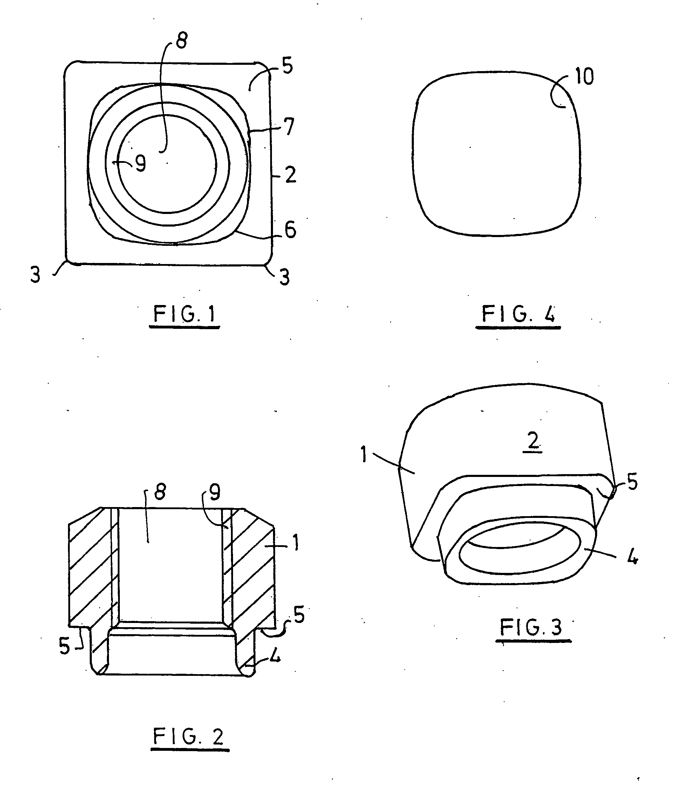

Das in den Figuren 1 bis 3 dargestellte Befestigungselement ist als Mutter ausgebildet. Es enthält einen zentralen Körper 1, der quaderförmig ausgebildet ist und vier Seitenwände 2 enthält. Dadurch ist eine quadratische Außenkontur gebildet, siehe Figur 1, deren Ecken 3 abgerundet sind. Auf seiner einen Seite, die zur Anlage an dem Bauteil bestimmt ist, ist an dem zentralen Körper 1 ein Befestigungsansatz 4 ausgebildet, der einstückig mit dem insgesamt einstückigen Befestigungselement ausgebildet ist. Dieser Befestigungsansatz 4 weist die Form einer flachen Hülse auf, siehe den Schnitt der Figur 2 und die Perspektivenansicht der Figur 3. Dieser Befestigungsansatz 4 ist konzentrisch zu der Außenkontur des Befestigungselements ausgebildet. Er ist dadurch auf allen Seiten von einer Anlagefläche 5 umgeben, die in einer Ebene liegt. Die Außenkontur des Befestigungsansatzes 4 weist die Form eines Quadrats mit abgerundeten Ecken 6 auf, wobei die Seitenwände 7 dieses Quadrats gegenüber einer Geraden leicht nach außen gekrümmt verlaufen.

In seiner Mitte ist das Befestigungselement von einer zylindrischen Öffnung 8 durchsetzt, deren Achse senkrecht zur Ebene der Anlagefläche 5 verläuft. Die zylindrische Öffnung 8 weist ein Innengewinde 9 auf. Die Innenform des Befestigungsansatzes 4 ist so gewählt, dass sie überall weiter von der Achse des Gewindes 9 entfernt ist als der Außendurchmesser einer Schraube, die in das Gewinde 9 eingeschraubt wird.

Figur 4 zeigt die Form eines Lochs 10 in einem Bauteil, mit dem das Befestigungselement der Figur 1 bis 3 verbunden werden soll. Dieses Loch 10 weist die gleiche Form auf wie die Außenkontur des Befestigungsansatzes 4, so dass sich das Befestigungselement mit seinem Befestigungsansatz 4 in das Loch 10 einsetzen lässt, bis die Anlagefläche 5 auf der Oberseite des Bauteils zur Anlage gelangt. In dieser Position ist das Befestigungselement zwar gegen Drehung gesichert, noch nicht aber gegen ein Entnehmen in der Richtung, aus der es eingesetzt wurde.

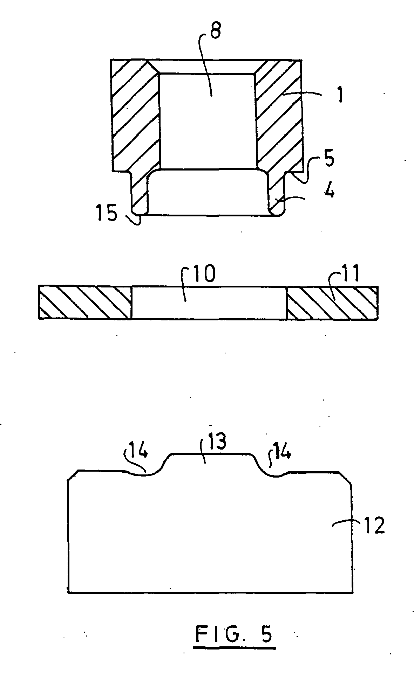

Um das Befestigungselement auch gegen Entnahme zu sichern, muss es mit dem Bauteil vernietet werden. Hierzu wird nun auf die Figur 5 verwiesen. Schematisch ist ein Bauteil 11 in Form einer einfachen Platte dargestellt, die das Loch 10 aufweist, dessen Form in Figur 4 schon dargestellt wurde. Unterhalb des Bauteils ist schematisch eine Matrize 12 dargestellt, die um einen erhabenen Vorsprung 13 herum eine abgerundete Rinne 14 aufweist. Das Bauteil 11 mit dem Loch 10 wird auf die Matrize 12 aufgelegt, wobei der Vorsprung 13 koaxial zu dem Loch 10 verläuft. Anschließend wird das Befestigungselement von oben her dem Loch 10 des Bauteils 11 angenähert. Dabei kann durch die quadratische Außenform des Befestigungselements dafür gesorgt werden, dass die Orientierung des Befestigungsansatzes 4 der Orientierung des Lochs 10 in dem Bauteil 11 entspricht. Dann wird der Befestigungsansatz 4 in das Loch 10 eingesetzt und durch Anwenden von Kraft der Befestigungsansatz 4 mit dem Bauteil 11 vernietet. Die Stirnkante 15 des Befestigungsansatzes 4 wird dabei in der Rinne 14 so umgeformt, dass sie sich nach außen verformt und damit das Bauteil 11 zwischen sich und der Anlagefläche 5 festlegt.

Ein insbesondere als Mutter mit einem Innengewinde ausgebildetes Befestigungselement enthält an seiner einem Bauteil zugeordneten Seite einen Befestigungsansatz in Form einer Hülse, die von einer in einer Ebene liegenden rings um den Befestigungsansatz verlaufenden Anlagefläche umgeben ist. Die Außenkontur des Befestigungsansatzes und die Außenkontur des Befestigungselements auf der dem Befestigungsansatz abgewandten Seite der Anlagefläche weicht von der Kreisform ab und weist insbesondere die Form eines Quadrats mit abgerundeten Ecken auf. Die Ecken des Befestigungselements sind an der gleichen Stelle angeordnet wie die Ecken des Befestigungsansatzes. Der Befestigungsansatz weist die Form einer Hülse auf mit einer abgerundeten Stirnkante. Der Befestigungsansatz wird mithilfe einer Matrize mit dem Bauteil vernietet.

## Patentansprüche

1. Befestigungselement zur Befestigung an einem ein Loch (10) aufweisenden Bauteil (11), mit
1.1 einer ebenen ringförmigen Anlagefläche (5),
1.2 einem über die Anlagefläche (5) vorstehenden Befestigungsansatz (4), der
1.2.1 eine von einer Kreisform abweichende Außenkontur aufweist,
1.3 einem an dem Befestigungsansatz (4) ausgebildeten durch einen Nietvorgang nach außen verformbaren Rand, sowie mit
1.4 einem durch die Außenkontur der Anlagefläche (5) gebildeten Ausrichtmittel zum winkelmäßigen Ausrichten des Befestigungselements gegenüber dem Loch (10),
**dadurch gekennzeichnet, dass**
1.5 der Befestigungsansatz an seiner Stirnkante (15) abgerundet ausgebildet ist.

2. Befestigungselement nach Anspruch 1, bei dem die Außenkontur des Befestigungsansatzes (4) ein Mehreck, insbesondere ein Viereck, mit abgerundeten Ecken (6) ist.

3. Befestigungselement nach Anspruch 2, bei dem das Mehreck gekrümmte Seitenlinien (7) aufweist.

4. Befestigungselement nach einem der vorhergehenden Ansprüche, bei dem das Befestigungselement in seinem dem Befestigungsansatz (4) abgewandten Bereich eine Außenkontur in Form eines Mehrecks, insbesondere eines Quadrats, mit abgerundeten Ecken (3) aufweist.

5. Befestigungselement nach Anspruch 4, bei dem die Form der Außenkontur in dem dem Befestigungsansatz (4) abgewandten Bereich des Befestigungselements der Form der Außenkontur des Befestigungsansatzes (4) geometrisch ähnlich ist.

6. Befestigungselement nach Anspruch 4 oder 5, bei dem Seitenflächen (2) des Befestigungselements angenähert parallel zu den Seitenlinien (7) der Außenkontur des Befestigungsansatzes (4) verlaufen.

7. Befestigungselement nach einem der Ansprüche 4 bis 6, bei dem die Außenkontur in dem dem Befestigungsansatz (4) abgewandten Bereich des Befestigungselements als Ausrichtmittel zum winkelmäßigen Ausrichten des Befestigungselements gegenüber dem Loch (10) ausgebildet ist.

8. Befestigungselement nach einem der vorhergehenden Ansprüche, mit einer durchgehenden insbesondere zylindrischen Öffnung (8).

9. Befestigungselement nach Anspruch 8, bei dem die Öffnung (8) ein Gewinde (9) aufweist.

10. Befestigungselement nach einem der Ansprüche 1 bis 7, mit einem sich senkrecht zu der Anlagefläche (5) erstreckenden insbesondere mit einem Gewinde versehenen Zapfen.

11. Befestigungselement nach einem der vorhergehenden Ansprüche, bei dem der Befestigungsansatz (4) als Hülse ausgebildet ist.

12. Verwendung eines Befestigungselements nach einem der vorhergehenden Ansprüche zur Anbringung an einem ein Loch (10) aufweisenden formgehärteten Bauteil (11) oder einem Bauteil aus hochfestem oder höherfestem Stahl, wobei das Befestigungselement mithilfe eines Stempels und einer Matrize (12) dadurch mit dem Bauteil (11) vernietet wird, dass der Rand des Ansatzes nach außen verformt wird.

13. Anordnung aus einem Befestigungselement nach einem der Ansprüche 1 - 11 und einem ein Loch (10) aufweisenden formgehärteten Bauteil (11) oder einem Bauteil (11) aus hochfestem oder höherfestem Stahl, wobei die Form und Größe des Befestigungsansatzes (4) des Befestigungselements dem Loch (10) des Bauteils (11) entspricht und der Rand des Befestigungsansatzes (4) nach außen verformt ist.

## Claims

1. Attachment element for fixing to a component (11) including a hole (10), comprising
1.1 a planar annular bearing surface (5),
1.2 a fixing projection (4) protruding beyond the bearing surface (5),
1.2.1 said projection having a non-circular outer contour,
1.3 a rim formed on the fixing projection (4) and outwardly deformable by means of a riveting procedure, and comprising
1.4 an orientation means formed by the outer contour of the bearing surface (5) for angular orientation of the attachment element in relation to the hole (10),
**characterized in that**
1.5 the fixing projection has a rounded shape on its front edge (15).

2. Attachment element according to claim 1, wherein the outer contour of the fixing projection (4) is a polygon, in particular is a rectangle, with rounded corners (6).

3. Attachment element according to claim 2, wherein the polygon has curved sidelines (7).

4. Attachment element according to any one of the preceding claims, wherein the attachment element in its region facing away from the fixing projection (4) has an outer contour in the shape of a polygon, in particular in the shape of a square, with rounded corners (3).

5. Attachment element according to claim 4, wherein the shape of the outer contour in the region of the attachment element facing away from the fixing projection (4) is geometrically similar to the shape of the outer contour of the fixing projection (4).

6. Attachment element according to claim 4 or 5, wherein lateral surfaces (2) of the attachment element are extending approximately in parallel to the sidelines (7) of the outer contour of the fixing projection (4).

7. Attachment element according to any one of claims 4 to 6, wherein the outer contour in the region of the attachment element facing away from the fixing projection (4) is an orientation means for angular orientation of the attachment element in relation to the hole (10).

8. Attachment element according to any one of the preceding claims, with an opening (8), in particular a cylindrical opening, passing through.

9. Attachment element according to claim 8, wherein the opening (8) has a thread (9).

10. Attachment element according to any one of claims 1 to 7, with a pin, in particular a threaded pin, extending perpendicular to the bearing surface (5).

11. Attachment element according to any one of the preceding claims, wherein the fixing projection (4) is a sleeve.

12. Use of an attachment element according to any one of the preceding claims for mounting on a mould-hardened component (11) including a hole (10) or a component made of high tensile steel or higher strength steel, wherein the attachment element is riveted to the component (11) using a punch and a die (12) in that the rim of the projection is deformed outwards.

13. Assembly composed of an attachment element according to any one of claims 1 to 11 and a mould-hardened component (11) including a hole (10) or a component (11) made of high tensile steel or higher strength steel, wherein the shape and size of the fixing projection (4) of the attachment element correspond to the hole (10) of the component (11) and the rim of the fixing projection (4) is deformed outwards.

## Revendications

1. Elément de fixation pour la fixation à un composant (11) présentant un trou (10), avec
1.1 une face d'appui annulaire plane (5),
1.2 un épaulement de fixation (4) saillant sur la face d'appui (5),
1.2.1 qui présente un contour extérieur différent de la forme circulaire,
1.3 un bord formé sur l'épaulement de fixation (4) et déformable vers l'extérieur par une opération de rivetage, ainsi qu'avec
1.4 un moyen d'orientation formé par le contour extérieur de la face d'appui (5) pour l'orientation angulaire de l'élément de fixation par rapport au trou (10),
**caractérisé en ce que**
1.5 l'épaulement de fixation est de forme arrondie à son côté frontal (15).

2. Elément de fixation selon la revendication 1, dans lequel le contour extérieur de l'épaulement de fixation (4) est un polygone, en particulier un carré, avec des angles arrondis (6).

3. Elément de fixation selon la revendication 2, dans lequel le polygone présente des côtés incurvés (7).

4. Elément de fixation selon l'une quelconque des revendications précédentes, dans lequel l'élément de fixation présente dans sa région située à l'opposé de l'épaulement de fixation (4) un contour extérieur en forme de polygone, en particulier d'un carré, avec des angles arrondis (3).

5. Elément de fixation selon la revendication 4, dans lequel la forme du contour extérieur dans la région de l'élément de fixation située à l'opposé de l'épaulement de fixation (4) est géométriquement semblable à la forme du contour extérieur de l'épaulement de fixation (4).

6. Elément de fixation selon la revendication 4 ou 5, dans lequel des faces parallèles (2) de l'élément de fixation sont approximativement parallèles aux côtés (7) du contour extérieur de l'épaulement de fixation (4).

7. Elément de fixation selon l'une quelconque des revendications 4 à 6, dans lequel le contour extérieur dans la région de l'élément de fixation située à l'opposé de l'épaulement de fixation (4) est configuré comme moyen d'orientation pour l'orientation angulaire de l'élément de fixation par rapport au trou (10).

8. Elément de fixation selon l'une quelconque des revendications précédentes, avec une ouverture continue (8), en particulier cylindrique.

9. Elément de fixation selon la revendication 8, dans lequel l'ouverture (8) présente un filet (9).

10. Elément de fixation selon l'une quelconque des revendications 1 à 7, avec un tourillon, en particulier pourvu d'un filet, s'étendant perpendiculairement à la face d'appui (5).

11. Elément de fixation selon l'une quelconque des revendications précédentes, dans lequel l'épaulement de fixation (4) est configuré en forme de douille.

12. Utilisation d'un élément de fixation selon l'une quelconque des revendications précédentes pour le placement sur un composant (11) trempé en forme ou un composant en acier à haute ou très haute résistance présentant un trou (10), dans laquelle l'élément de fixation est riveté au moyen d'un poinçon et d'une matrice (12) avec le composant (11) par le fait que le bord de l'épaulement est déformé vers l'extérieur.

13. Agencement composé d'un élément de fixation selon l'une quelconque des revendications 1 à 11 et d'un composant (11) trempé en forme ou d'un composant (11) en acier à haute ou très haute résistance présentant un trou (10), dans lequel la forme et la grandeur de l'épaulement de fixation (4) de l'élément de fixation correspondent au trou (10) du composant (11) et le bord de l'épaulement de fixation (4) est déformé vers l'extérieur.
